# EUROPEAN PATENT SPECIFICATION

(11) **EP 3 912 884 B1**
(45) Date of publication and mention of the grant of the patent: **17.07.2024**
(21) Application number: 21172062.8
(22) Date of filing: 04.05.2021
(51) Int. Cl.: B62B 3/00, B62B 5/00

(54) **DEVICE FOR DRIVING A MOBILE OBJECT, IN PARTICULAR A HAND-PROPELLED VEHICLE**
VORRICHTUNG ZUM ANTREIBEN EINES BEWEGLICHEN GEGENSTANDS, INSBESONDERE EINES VON HAND BEWEGTEN FAHRZEUGS
DISPOSITIF D'ENTRAÎNEMENT D'UN OBJET MOBILE, NOTAMMENT D'UN VÉHICULE PROPULSÉ À LA MAIN

(30) Priority: 19.05.2020 NL 2025624
(43) Date of publication of application: 24.11.2021
(73) Proprietor: B.M. Innovaties B.V., 6673 DM Andelst (NL)
(72) Inventor: Bolt, Johannes Jacobus, 6671 MC Zetten (NL)
(74) Representative: 't Jong, Bastiaan Jacob

(56) References cited:
- EP-A1- 2 233 380
- EP-A1- 3 459 851
- EP-A2- 2 033 610
- WO-A1-2007/093549
- DE-A1- 102007 004 704
- DE-U1- 20 305 872
- FR-A1- 2 746 060
- JP-A- 2001 130 414
- US-A1- 2006 024 150
- US-A1- 2019 061 446
- US-B1- 9 796 401

## Description

The invention relates to a device for driving a mobile object such as for instance a warehouse cart. The invention also relates to a combination of a device according to the invention and a mobile object such as for instance a warehouse cart.

For stocking retail businesses, among other purposes, use is made of mobile objects such as warehouse carts and rolling containers. Such mobile objects or carts are loaded from a warehouse for a specific delivery. The cart is here manoeuvred through the warehouse many times. The cart is usually displaced manually herein. Because the laden weight of such carts can quickly become very high, walking with the carts requires strenuous physical effort on the part of personnel.

For this purpose warehouse carts have been developed which are provided with a drive, whereby the physical exertion during manoeuvring is greatly reduced. Because all carts must be provided with a drive individually, the cost price for such carts is very high. The drive of all carts must here be serviced and charged, and it is undesirable for the loaded driven carts to be taken along on the transport to the customer.

Mobile objects are also displaced using for instance driven pallet trucks or electric roller container movers. A drawback hereof is that the manoeuvrability decreases.

Devices for driving a mobile object are disclosed for example in DE 20305872 U1, in FR 2746060 A1, in US 9,796,401 B1, in EP 2033610 A2, in WO 2007/093549 A1 and in EP 3459851 A1.

It is now an object of the invention to provide a device for driving a mobile object, wherein the above stated drawbacks are reduced or even obviated. This object is achieved according to the invention with a device for driving a mobile object as defined in claim 1. Preferred embodiments are defined in the dependent claims.

Making use of a device which can be coupled to and uncoupled from the bottom of a mobile object such as a cart in simple manner enables the same drive to be used for multiple carts in simple manner. Hereby, not all carts need be provided with their own drive.

When it is not coupled, the device can be displaced over the ground surface in simple manner by the at least one frame wheel. The device preferably has three or four frame wheels. In order to obtain a good manoeuvrability some or even all of the frame wheels can be embodied as swivel wheel.

The device can be displaced parallel to the ground surface, and be moved underneath a mobile object to be driven, by the at least one frame wheel. Once the device has been positioned correctly, the device can be coupled to the underside of the mobile object to be driven.

Because the at least one drive wheel can be displaced between a positioning position, in which the device can be positioned in simple manner without the manoeuvrability of the device being impeded by contact of the at least one drive wheel with the ground surface, and a driving position in which the at least one drive wheel makes contact with the ground surface, coupling of the device to a mobile object to be driven is very simple. The drive unit need not be controlled in accordance with the manoeuvring movements during the positioning, since the at least one drive wheel does not make contact with the ground surface.

The device preferably comprises one drive wheel. The drive wheel then forms an unambiguous rotation axis in the driving position.

The coupling device can for instance be arranged on the side of the frame lying opposite relative to at least one frame wheel, so that a coupling to the underside of a mobile object can be formed in simple manner. The coupling device can also be arranged on a peripheral edge of the frame so that a very low profile of the frame, and thereby a low headroom, can be obtained.

The contact surface with the ground of the at least one frame wheel lies in a first plane and the coupling device comprises at least one coupling element for coupling to the underside of a mobile object, wherein the distance between the at least one coupling element and the first plane is smaller when the device is coupled to the underside of a mobile object than when the device is uncoupled.

The first plane, in which lies the contact surface of the at least one frame wheel with the ground surface, substantially coincides with the ground surface during positioning of the device in uncoupled state. When the device is now coupled to the underside of a mobile object, the distance between the at least one coupling element and the first plane becomes smaller. The first plane hereby preferably comes to lie at a distance from but at least at an angle to the ground surface. Part of the own weight of the device is hereby transferred to the mobile object by the coupling device. This lowers the centre of gravity of the mobile object. This makes the combination more stable. The wheels of the mobile object itself also remain in contact with the ground surface. The mobile object thus need for instance not be tilted.

The at least one coupling element can couple to the underside of the mobile object using for instance magnetic force, a suction cup or a releasable, form-fitting connection.

Also according to the invention is an embodiment of a device wherein the coupling device comprises at least two, preferably at least four coupling elements.

By applying at least two coupling elements a stable connection to the mobile object can be obtained in simple manner. The at least two coupling elements can for instance be arranged at a mutual distance, such as close to the short sides of an elongate frame, whereby a firm coupling to the mobile object is obtained. The coupling device preferably comprises at least four coupling elements so that the coupling elements can be arranged distributed around the periphery of the frame of the device, for instance close to the corners of a rectangular frame.

A preferred embodiment of a device according to the invention is a device wherein the displacement from the positioning position to the driving position of the at least one drive wheel is accompanied by coupling of the device to the underside of a mobile object.

By combining the coupling to the underside of a mobile object with the displacement of the at least one drive wheel to the driving position the same actuator can be used therefor. The movement required for the coupling can be transmitted to the drive unit by means for instance a rod mechanism for the purpose of displacing the at least one drive wheel from the positioning position to the driving position.

Also according to the invention is an embodiment of a device wherein a handle reaches upward from the frame for positioning of the device by a user.

The device can be displaced by manual operation in simple manner by a handle standing upright from the frame to for instance hand height. The handle can for instance comprise a push bar. A control panel can also be arranged on the handle for the purpose of controlling the drive unit and/or setting the coupling or uncoupling into action and/or displacing the at least one drive wheel between the positions.

The invention also relates to a combination of a device according to the invention and a mobile object such as for instance a warehouse cart, which mobile object is provided on the underside with at least three wheels configured to move the mobile object over and parallel to a ground surface, wherein the device is coupled to the underside of the mobile object and, in the driving position of the device, at least and preferably exclusively the at least one drive wheel of the device and the at least three wheels of the mobile object make contact with the ground surface.

A combination of a mobile object and a device according to the invention, wherein the device is coupled to the mobile object, is particularly advantageous when the wheels of the mobile object and the drive wheel of the device make contact with the ground surface. Because the mobile object supports part of the weight of the device due to the coupling, the mobile object becomes heavier. This lowers the centre of gravity, but does not change the support points of the wheels of the mobile object, nor the manner in which the mobile object is displaceable over the ground surface, since the wheels of the mobile object are in contact with the ground surface in the same way as without coupled device. There is therefore no need for the mobile object to have an oblique position to accommodate the device.

Only the at least one drive wheel of the device is preferably in contact with the ground surface. Because the at least one frame wheel is also clear of the ground, this does not affect the steering behaviour. Nor is any unnecessary sound for instance caused by a frame wheel which would still be in contact with the ground surface and which might be rolling along.

A preferred embodiment of a combination according to the invention is a combination wherein the at least one drive wheel is positioned centrally under the mobile object.

A combination wherein the at least one drive wheel, preferably one drive wheel, is located centrally relative to the rotation axis of the mobile object can be steered intuitively. Particularly when the plane of rotation of the drive wheel lies in line with the normal advancing direction of the mobile object.

Also according to the invention is an embodiment of a device wherein the mobile object is provided on the underside with coupling means, such as for instance two elongate u-profiles disposed parallel and configured for coupling to the coupling device of the device.

Coupling means, such as for instance u-profiles, arranged on the underside of a mobile object can simplify the alignment relative to, and coupling of the device to, the mobile object. U-profiles can for instance be oriented parallel to each other and the ground surface and with the open sides facing each other or remote from each other so that coupling elements of the coupling device, for instance provided with rollers, can engage in the open sides of the profiles. This simplifies placing of the device relative to the mobile object.

In an embodiment of a combination according to the invention the at least three wheels of the mobile object support in the driving position the whole weight of the device minus the contact force of the at least one drive wheel on the ground surface which is necessary for obtaining sufficient grip.

By having only the at least one drive wheel lie against the ground with the contact force necessary for obtaining sufficient grip as much of the own weight of the device as possible is transferred to the mobile object. The lowering of the centre of gravity is maximized hereby, and the most stable possible combination is obtained.

These and other features of the invention are further elucidated with reference to the accompanying drawings.
Figure 1 shows an embodiment of a device according to the invention in perspective view.
Figure 2a shows a side view of the device according to figure 1.
Figure 2b shows a rear view of the device according to figure 1.
Figure 2c shows a top view of the device according to figure 1.
Figure 3 shows a side view of a combination of a device according to the invention and a mobile object.
Figure 4 shows a side view of the combination of figure 3 in coupled state.

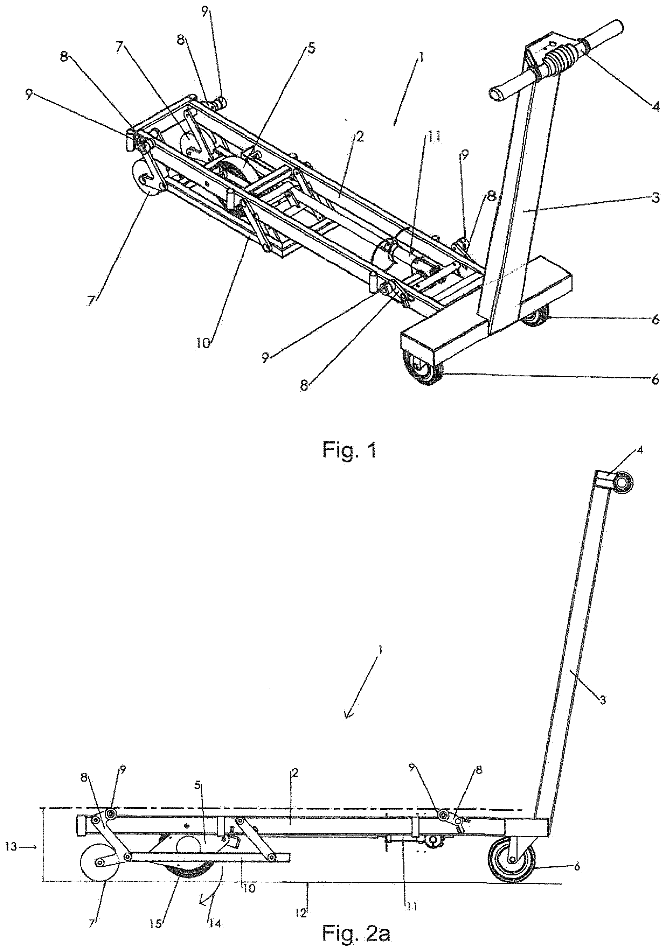

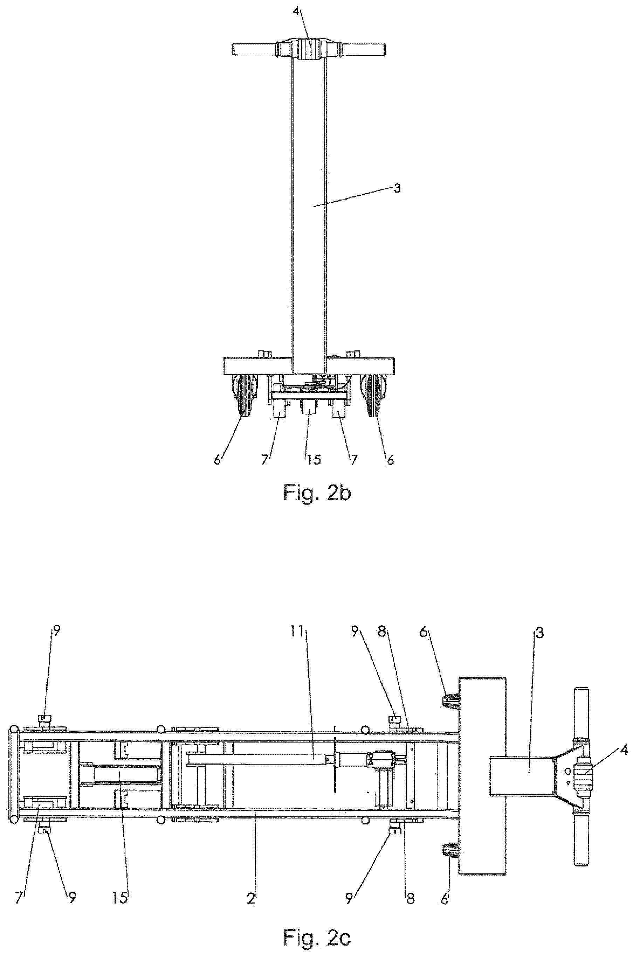

Figures 1 and 2a-2c show a device 1 according to the invention. Arranged at an outer end of the frame 2 is an upright handle 3 provided with operating elements 4 for controlling the drive unit 5. Provided on the side of the upright handle 3 are swivelling frame wheels 6. Arranged at the other outer end of frame 2 are two normal wheels 7. The coupling elements 8 of the coupling device are arranged on the side lying opposite the frame wheels 6, 7 for coupling to the underside of a mobile object. Coupling elements 8 are provided with rollers 9. The coupling elements 8 of the coupling device are connected by means of a rod mechanism 10 to drive unit 5. An actuator 11 provides for the necessary driving of the coupling device and for the displacement of the drive wheel 15 of drive unit 5 from the positioning position to the driving position. The low profile of device 1 enables the device to be positioned under a mobile object in simple manner. Device 1 is shown in non-coupled state, wherein drive wheel 15 of drive unit 5 is not in contact with the ground surface. The distance 13 from first plane 12 to a coupling element 8 becomes smaller in coupled state, whereby the frame wheels 6, 7 come off the ground. During coupling drive wheel 15 pivots in the direction of arrow 14 due to the movement of rod mechanism 10.

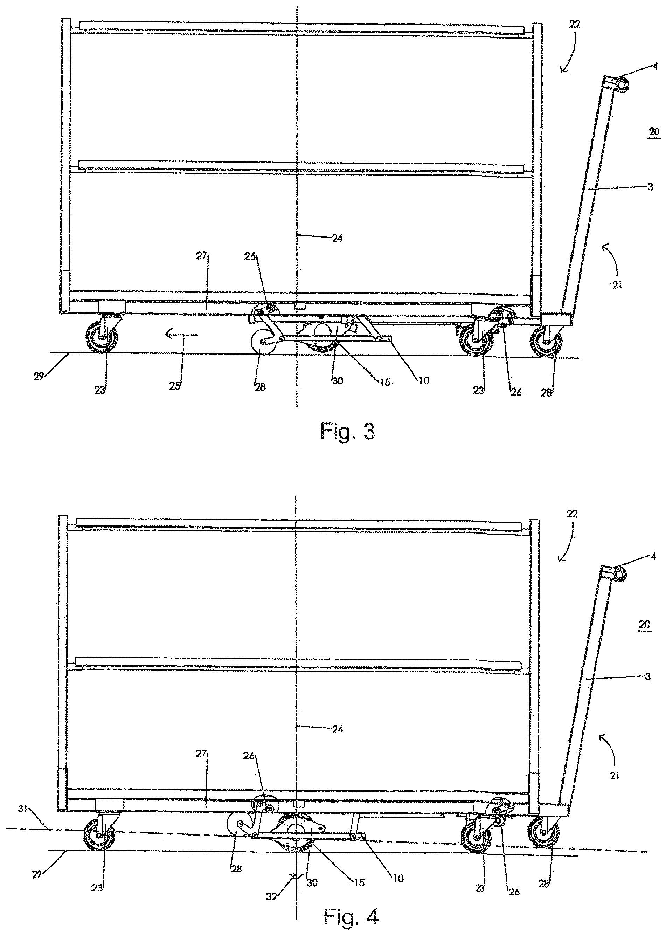

Figures 3 and 4 show a side view of a combination 20 of a device 21 according to the invention and a mobile object 22. Mobile object 22 is provided with swivelling wheels 23 and has a rotation axis 24. Device 21 is positioned under mobile object 22 in the direction of arrow 25. Coupling elements 26, made visible in the figure by omission of a part of the mobile object 22, lie in the opening of a u-profile 27 arranged on the underside of the mobile object. Frame wheels 28 are still in contact with ground surface 29. Drive unit 30 is positioned in the vicinity of the rotation axis 24 of mobile object 22.

Figure 4 shows the combination 20 of figure 3, wherein the device 21 is coupled to mobile object 22. The distance between first plane 31 and coupling elements 26 is smaller than in figure 3, whereby the frame wheels 28 have come off the ground 29. Device 21 is in fact suspended on the underside of mobile object 22 by the coupling. Drive unit 30 with drive wheel 15 has been pivoted downward, whereby drive wheel 15 has moved to the drive position in which drive wheel 15 is in contact with ground surface 29, centrally relative to rotation axis 24. In the shown embodiment the first plane 31 lies at an angle to the ground surface 29 in that the front frame wheels are pivoted upward relative to the rear frame wheels. The weight of device 21, with the exception of contact force 32, is diverted via wheels 23 to the ground surface 29.

## Claims

1. Device (1; 21) for driving a mobile object (22) such as for instance a warehouse cart, which device (1; 21) comprises:
- a frame (2);
- at least one frame wheel (6, 7; 28) for displacing the device (1; 21) over and parallel to a ground surface (29), which at least one frame wheel (6, 7; 28) is mounted on the frame (2);
- a drive unit (5; 30), which drive unit (5; 30) is mounted on the frame (2) and comprises at least one drive wheel (15), and
- a coupling device, which coupling device is mounted on the frame (2), for coupling and uncoupling the device (1; 21) respectively to and from the underside of a mobile object (22), wherein the at least one drive wheel (15) is displaceable between a positioning position and a driving position, wherein the at least one drive wheel (15) is clear of the ground surface (29) in the positioning position and makes contact with the ground surface (29) in the driving position,
**characterized in that**
the contact surface with the ground of the at least one frame wheel (6, 7; 28) lies in a first plane (12) and the coupling device comprises at least one coupling element (8; 26) for coupling to the underside of a mobile object (22), wherein the distance between the at least one coupling element (8; 26) and the first plane (12) is smaller when the device (1; 21) is coupled to the underside of a mobile object (22) than when the device (1; 21) is uncoupled.

2. Device (1; 21) according to claim 1, wherein the coupling device comprises at least two, preferably at least four coupling elements (8; 26).

3. Device (1; 21) according to any one of the foregoing claims, wherein the displacement from the positioning position to the driving position of the at least one drive wheel (15) is accompanied by coupling of the device (1; 21) to the underside of a mobile object (22).

4. Device (1; 21) according to any one of the foregoing claims, wherein a handle (3) reaches upward from the frame (2) for positioning of the device (1; 21) by a user.

5. Combination (20) of a device (21) according to any one of the foregoing claims and a mobile object (22) such as for instance a warehouse cart, which mobile object (22) is provided on the underside with at least three wheels (23) configured to move the mobile object (22) over and parallel to a ground surface (29), wherein the device (21) is coupled to the underside of the mobile object (22) and, in the driving position of the device (21), at least and preferably exclusively the at least one drive wheel (15) of the device (21) and the at least three wheels (23) of the mobile object (22) make contact with the ground surface (29).

6. Combination (20) according to claim 5, wherein the at least one drive wheel (15) is positioned centrally under the mobile object (22).

7. Combination (20) according to any one of the foregoing claims 5 or 6, wherein the mobile object (22) is provided on the underside with coupling means, such as for instance two elongate u-profiles (27) disposed parallel and configured for coupling to the coupling device of the device (21) .

8. Combination (20) according to any one of the foregoing claims 5, 6 or 7, wherein the at least three wheels (23) of the mobile object (22) support in the driving position the whole weight of the device (21) minus the contact force of the at least one drive wheel (15) on the ground surface (29) which is necessary for obtaining sufficient grip.

## Patentansprüche

1. Vorrichtung (1; 21) zum Antreiben eines beweglichen Gegenstands (22), wie etwa ein Lagerhauswagen, wobei die Vorrichtung (1; 21) umfasst:
- einen Rahmen (2);
- mindestens ein Rahmenrad (6, 7; 28) zum Verschieben der Vorrichtung (1; 21) über und parallel zu einer Bodenfläche (29), wobei mindestens ein Rahmenrad (6, 7; 28) am Rahmen (2) montiert ist;
- eine Antriebseinheit (5; 30), wobei die Antriebseinheit (5; 30) am Rahmen (2) montiert ist und mindestens ein Antriebsrad (15) umfasst, und
- eine Kopplungsvorrichtung, wobei die Kopplungsvorrichtung zum An- und Abkoppeln der Vorrichtung (1; 21) an jeweils an und von der Unterseite eines beweglichen Gegenstands (22) am Rahmen (2) montiert ist, wobei das mindestens eine Antriebsrad (15) zwischen einer Positionierungsposition und einer Antriebsposition verschiebbar ist, wobei das mindestens eine Antriebsrad (15) in der Positionierungsposition die Bodenoberfläche (29) nicht berührt und in der Antriebsposition mit der Bodenoberfläche (29) in Kontakt ist,
**dadurch gekennzeichnet, dass**
die Kontaktoberfläche mit dem Boden des mindestens einen Rahmenrades (6, 7; 28) in einer ersten Ebene (12) liegt und die Kopplungsvorrichtung mindestens ein Kopplungselement (8; 26) zum Ankoppeln an die Unterseite eines beweglichen Gegenstands (22) umfasst, wobei der Abstand zwischen dem mindestens einen Kopplungselement (8; 26) und der ersten Ebene (12) geringer ist, wenn die Vorrichtung (1; 21) an die Unterseite eines beweglichen Gegenstands (22) angekoppelt ist, als wenn die Vorrichtung (1; 21) abgekoppelt ist.

2. Vorrichtung (1; 21) nach Anspruch 1, wobei die Kopplungsvorrichtung mindestens zwei, vorzugsweise mindestens vier Kopplungselemente (8; 26) umfasst.

3. Vorrichtung (1; 21) nach einem der vorstehenden Ansprüche, wobei die Verschiebung des mindestens einen Antriebsrads (15) von der Positionierungsposition in die Antriebsposition mit Ankoppeln der Vorrichtung (1; 21) an die Unterseite eines beweglichen Gegenstands (22) einhergeht.

4. Vorrichtung (1; 21) nach einem der vorstehenden Ansprüche, wobei ein Griff (3) zum Positionieren der Vorrichtung (1; 21) durch einen Benutzer vom Rahmen (2) nach oben ragt.

5. Kombination (20) aus einer Vorrichtung (21) nach einem der vorstehenden Ansprüche und einem beweglichen Gegenstand (22), wie etwa einem Lagerhauswagen, wobei der bewegliche Gegenstand (22) an der Unterseite mit mindestens drei Rädern (23) bereitgestellt ist, die dazu konfiguriert sind, den beweglichen Gegenstand (22) über und parallel zu einer Bodenoberfläche (29) zu bewegen, wobei die Vorrichtung (21) an die Unterseite des beweglichen Gegenstands (22) gekoppelt ist und, in der Antriebsposition der Vorrichtung (21), mindestens und vorzugsweise ausschließlich das mindestens eine Antriebsrad (15) der Vorrichtung (21) und die mindestens drei Räder (23) des beweglichen Gegenstands (22) in Kontakt mit der Bodenoberfläche (29) sind.

6. Kombination (20) nach Anspruch 5, wobei das mindestens eine Antriebsrad (15) mittig unter dem beweglichen Gegenstand (22) positioniert ist.

7. Kombination (20) nach einem der vorstehenden Ansprüche 5 oder 6, wobei der bewegliche Gegenstand (22) an der Unterseite mit Kupplungsmitteln, wie etwa zwei länglichen U-Profilen (27), bereitgestellt ist, die parallel angeordnet und zum Ankuppeln an die Kopplungsvorrichtung der Vorrichtung (21) konfiguriert sind.

8. Kombination (20) nach einem der vorstehenden Ansprüche 5, 6 oder 7, wobei die mindestens drei Räder (23) des beweglichen Gegenstands (22) in der Antriebsposition das gesamte Gewicht der Vorrichtung (21) abzüglich der Kontaktkraft des mindestens einen Antriebsrads (15) auf der Bodenoberfläche (29) tragen, die zum Erhalten ausreichender Haftung erforderlich ist.

## Revendications

1. Dispositif (1 ; 21) pour entraîner un objet mobile (22), tel que, par exemple, un chariot d'entrepôt, lequel dispositif (1 ; 21) comprend :
- un châssis (2) ;
- au moins une roue de châssis (6, 7 ; 28) pour déplacer le dispositif (1 ; 21) sur une surface de sol (29), et parallèlement à celle-ci, laquelle au moins une roue de châssis (6, 7 ; 28) est montée sur le châssis (2) ;
- une unité d'entraînement (5 ; 30), laquelle unité d'entraînement (5 ; 30) est montée sur le châssis (2) et comprend au moins une roue motrice (15), et
- un dispositif de couplage, lequel dispositif de couplage est monté sur le châssis (2), pour coupler le dispositif (1; 21) respectivement à la face inférieure, et le découpler de celle-ci, d'un objet mobile (22), dans lequel la au moins une roue motrice (15) peut être déplacée entre une position de positionnement et une position de conduite, dans lequel la au moins une roue motrice (15) est dégagée de la surface du sol (29) dans la position de positionnement et vient en contact avec la surface du sol (29) dans la position de conduite,
**caractérisé en ce que**
la surface de contact avec le sol de la au moins une roue de châssis (6, 7 ; 28) se trouve dans un premier plan (12) et le dispositif de couplage comprend au moins un élément de couplage (8 ; 26) pour le couplage à la face inférieure d'un objet mobile (22), dans lequel la distance entre le au moins une élément de couplage (8 ; 26) et le premier plan (12) est plus petite lorsque le dispositif (1 ; 21) est couplé à la face inférieure d'un objet mobile (22) que lorsque le dispositif (1 ; 21) est découplé.

2. Dispositif (1 ; 21) selon la revendication 1, dans lequel le dispositif de couplage comprend au moins deux, de préférence au moins quatre éléments de couplage (8 ; 26).

3. Dispositif (1 ; 21) selon l'une quelconque des revendications précédentes, dans lequel le déplacement de la position de positionnement à la position de conduite de la au moins une roue motrice (15) est accompagné du couplage du dispositif (1 ; 21) à la face inférieure d'un objet mobile (22).

4. Dispositif (1 ; 21) selon l'une quelconque des revendications précédentes, dans lequel une poignée (3) s'étend vers le haut depuis le châssis (2) pour le positionnement du dispositif (1 ; 21) par un utilisateur.

5. Combinaison (20) d'un dispositif (21) selon l'une quelconque des revendications précédentes et d'un objet mobile (22), tel que, par exemple, un chariot d'entrepôt, lequel objet mobile (22) est pourvu, sur sa face inférieure, d'au moins trois roues (23) configurées pour déplacer l'objet mobile (22) sur une surface du sol (29), et parallèlement à celle-ci, dans laquelle le dispositif (21) est couplé à la face inférieure de l'objet mobile (22) et, dans la position de conduite du dispositif (21), au moins, et de préférence exclusivement, la au moins une roue motrice (15) du dispositif (21) et les au moins trois roues (23) de l'objet mobile (22) viennent en contact avec la surface du sol (29).

6. Combinaison (20) selon la revendication 5, dans laquelle la au moins une roue motrice (15) est positionnée au centre sous l'objet mobile (22).

7. Combinaison (20) selon l'une quelconque des précédentes revendications 5 ou 6, dans laquelle l'objet mobile (22) est pourvu, sur la face inférieure, de moyens de couplage, tels que, par exemple, deux profilés en U allongés (27) disposés parallèlement et configurés pour être couplés au dispositif de couplage du dispositif (21).

8. Combinaison (20) selon l'une quelconque des précédentes revendications 5, 6 ou 7, dans laquelle les au moins trois roues (23) de l'objet mobile (22) supportent en position de conduite tout le poids du dispositif (21) moins la force de contact de la au moins une roue motrice (15) sur la surface du sol (29), qui est nécessaire pour obtenir une adhérence suffisante.
